# EUROPEAN PATENT SPECIFICATION

(11) **EP 1 667 015 B1**
(45) Date of publication and mention of the grant of the patent: **29.02.2012**
(21) Application number: 04771120.5
(22) Date of filing: 27.07.2004
(51) Int. Cl.: G06F 9/06, H04N 5/907, H04N 5/93

(54) **MEMORY DEVICE, RECORDING MEDIUM RECORDING THEREIN DATA PROCESSING PROGRAM, PROGRAM, DATA PROCESSING SYSTEM, AND DATA PROCESSING METHOD**
SPEICHERBAUSTEIN, AUFZEICHNUNGSMEDIUM, WORIN EIN DATENVERARBEITUNGSPROGRAMM AUFGEZEICHNET WIRD, PROGRAMM, DATENVERARBEITUNGSSYSTEM UND DATENVERARBEITUNGSVERFAHREN
DISPOSITIF DE MEMOIRE, SUPPORT D'ENREGISTREMENT SUR LEQUEL EST ENREGISTRE UN PROGRAMME DE TRAITEMENT DE DONNEES, PROGRAMME, DONNEES, SYSTEME DE TRAITEMENT DE DONNEES ET PROCEDE DE TRAITEMENT DE DONNEES

(30) Priority: 06.08.2003 JP 2003287723
(43) Date of publication of application: 07.06.2006
(73) Proprietor: Sony Corporation, Tokyo 141-0001 (JP)
(72) Inventor: MUKAIHARA, Hiroshi c/o Sony Corporation, Tokyo 141 (JP); SHIMODA, Kunihiko c/o Sony Corporation, Tokyo 141 (JP)
(74) Representative: Keston, Susan Elizabeth
(86) International application number: PCT/JP2004/011024
(87) International publication number: WO 2005/015385

(56) References cited:
- JP-A- 9 297 827
- JP-A- 2000 013 237
- JP-A- 2001 117 783
- JP-A- 2001 166 927
- JP-A- 2002 157 097
- US-A1- 2003 011 688
- US-A1- 2003 101 294

## Description

### TECHNICAL FIELD

The present invention relates to a memory device storing a program for processing, for example, data of still images and moving images and audio data, a recording medium, the program, a data processing system and a data processing method.

### BACKGROUND ART

In order to view images picked up by a digital camera or the like on a monitor of a PC (Personal Computer) or the like, a conventional technique allows a user to easily transfer image data from a digital camera to PC and view the image. This technique adopts the configuration that program data for reproduction, editing and the like of an image file by using PC is stored beforehand on a digital camera side so that this program is not required to be installed in PC (e.g., refer to Japanese Patent Application Publication No. HEI 09-312791 (Paragraph [0023], Fig. 1)).

There is another technique in which image data in a memory card picked up by a digital camera is automatically transferred to a storage server at a physically remote location when the memory card is connected to PC or the like (e.g., refer to Japanese Patent Application Publication No. 2002-32302 (Paragraphs [0062] to [0067], Fig. 5, etc.)).

In a system described in Japanese Patent Application Publication No. HEI 09-312791, in order to view an image picked up by the digital camera, a user is inconveniently required to activate the image reproduction program automatically installed in PC or the like. It is expected that a user can have very high convenience if images and music can be enjoyed easily on PC similar to, for example, enjoying movie or the like on a television.

Under the above-described circumstances, an object of the present invention is to provide a memory device storing a program allowing to easily view and listen image data and audio data with simple operations, a recording medium, the program, a data processing system and a data processing method.

US 2003/0011688 A1 describes removable media host executables.

US 2003/0101294 A1 describes a method and architecture to support interaction between a host computer and remote devices.

US 2002/0069237 A1 describes an information processing system and method and a storage medium therefor.

### DISCLOSURE OF THE INVENTION

Aspects of the present invention are set out in the appended claims.

In order to achieve the above, a memory device of an example embodiment, which is a portable memory device, includes (a) a terminal capable of being connected to an interface mounted on a host machine and capable of data input/output from/to the host machine and (b) a storage element for storing at least one of image data and audio data, reproduction program data for the host machine to reproduce at least one of the image data and audio data, and execution program data for the host machine to execute a program of the reproduction program data in response to a detection signal that the host machine detects a connection of the terminal to the interface.

In the example embodiment, the host machine is a machine having a computer function. The image data includes a still images file and a moving image file. These are applied also to the following description.

According to an example embodiment, after the reproduction program and execution program are installed once in the host machine, the reproduction program can be automatically activated and image data and the like stored in the memory device can be reproduced when the interface of the host machine is connected to the terminal of the memory device. Viewing image data and the like can be made more convenient.

If the host machine does not store the reproduction program data and execution program data, the memory device may store a program for automatically or manually installing the reproduction program data and execution program data in the host machine. In this case, in response to that the terminal of the memory device is connected to the host machine, the install program can be executed to install the reproduction program and execution program, At a result, even an apparatus other than the host machine can reproduce image data and the like stored in the memory device by using the reproduction program and execution program.

According to an example embodiment, if the host machine stores beforehand at least the reproduction program data and execution program data and when the terminal is connected to the interface in the state that the storage element stores at least one of the image data and audio data, the host machine activates the execution program in response to the detection signal to read and reproduce at least one of the image data and audio data stored in the memory element.

A recording medium of an example embodiment records a program for making a host machine having an interface capable of data input/output execute the program which includes (a) a step of detecting a detection signal indicating that a terminal of a portable memory device is connected to the interface and (b) a step of executing a program in a reproduction program data for reproducing at least one of image data and audio data stored in the memory device, in response to the detection signal.

According to an example embodiment, if the host machine stores at least one of the image data and audio data and the reproduction program data and the execution program data before the step (a), the host machine is made to execute before the step (a) a step (c) of outputting at least one of the image data and audio data to the memory device and a step (d) of controlling to output the reproduction program data and execution program data to the memory device at the same time as, duping or after the step (c), in the state that the terminal of the memory device is connected to the interface. Accordingly, as a user outputs the image data and the like to the host machine, the reproduction program data and execution program data can also be output to the host machine without user recognition. Therefore, for example, if the memory device stores a program for automatically or manually installing these program data in the host machine, the following process can be executed. Namely, when a user desires to view the image and the like stored in the memory device on an apparatus other than the host machine, the install program can be executed to install the reproduction program and execution program in the other apparatus, in response to that the other apparatus detects a connection of the terminal of the memory device to an interface. I is therefore convenient in that the other apparatus can read and reproduce the image data and the like stored in the memory device.

A data processing system of an example embodiment includes (a) a host machine having an interface capable of data input/output, and (b) a portable memory device having a terminal capable of being connected to said interface, and a storage element for storing at least one of image data and audio data, reproduction program data for the host apparatus to reproduce at least one of the image data and audio data, and execution program data for the host machine to execute a program in the reproduction program data in response to a detection signal that the host machine detects a connection of the terminal to the interface.

According to an example embodiment, for example, if the host machine stores in advance the reproduction program data and execution program data and when the terminal of the memory device is connected to the interface of the host machine, the reproduction program can be activated automatically to reproduce the image data and the like. It becomes therefore more convenient in viewing the image data and the like.

According to an example embodiment, an external apparatus is further provided being connected to the host machine via a network, and the host machine has a means for controlling to activate the execution program in response to the connection detection signal and outputting at least one of the image data and audio data to the external apparatus via the network, when the terminal is connected to the interface in the state that at least one of the image data and audio data is stored in the storage element. Accordingly, for example, if the external apparatus stores the reproduction program data and execution program data, the image and the like can be viewed merely by connecting the memory device to the host machine.

A data processing method of an example embodiment includes (a) a step of detecting a detection signal by a host machine having an interface capable of data input/output, the detection signal indicating that the interface is connected to a terminal of a portable memory device and (b) a step of executing a program in reproduction program data for reproducing by the host machine at least one of image data and audio data stored in the memory device in response to the detection signal.

As described above, according to the present invention, image data and audio data can be viewed easily with simple operations.

### BRIEF DESCRIPTION OF THE DRAWINGS

Fig. 1 is a diagram showing the configuration of a data processing system according to an embodiment of the present invention.
Fig. 2 is a flow chart illustrating the operation of the system shown in Fig. 1.
Fig. 3 is a diagram showing an example of a screen displayed on a display when a data write work is performed for a memory device.
Fig. 4 is a diagram showing an example of a screen displayed on the display when a data write work is performed for the memory device.
Fig. 5 is a diagram showing an example of a screen displayed on the display when a data write work is performed for the memory device.
Fig. 6 is a flow chart illustrating an operation of reproducing image data or the like.
Fig. 7 is a diagram showing an example of a screen displayed on the display by a reproduction program with a GUI function.
Fig. 8 is a diagram showing an example of a screen displayed on the display by a reproduction program with a GUI function.
Fig. 9 is a diagram showing the configuration of a data processing system according to another embodiment of the present invention.

### BEST MODE FOR CARRYING OUT THE INVENTION

In the following, embodiments of the present invention will be described with reference to the drawings.

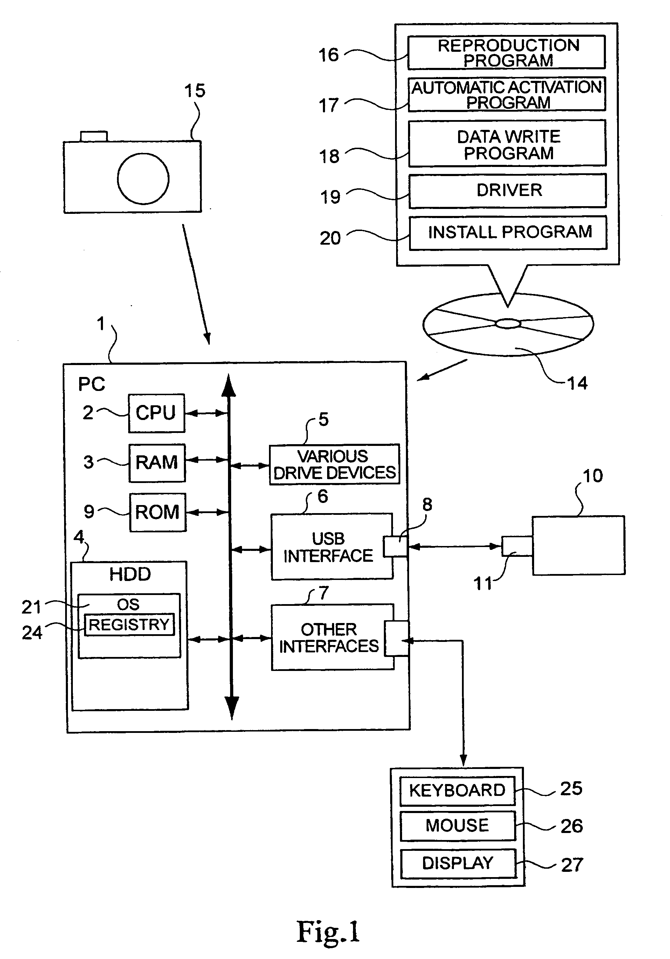

Fig. 1 is a diagram showing the configuration of a data processing system according to an embodiment of the present invention. The data processing system has as a host machine, for example, a PC 1. PC 1 has a CPU (Central Processing Unit) 2 for executing general control such as arithmetic processing, a RAM (Random Access Memory) 3 as a working space for processing by CPU 2, an HDD (Hard Disk Drive) 4 for storing predetermined software such as an OS (Operating System) 21, a ROM 9 and the like. PC 1 has also a USB (Universal Serial Bus) interface 6 for example, other interfaces 7 for parallel communications and the like, and various drive devices 5 such as a CD-ROM drive, a floppy (registered trademark) disk drive. Operation devices such as a keyboard 25, a mouse 26 and a display 27 are connected to the interface 7.

Reference numeral 15 represents a digital camera. PC 1 can store image data including, e.g., moving image data and the like picked up by the digital camera 15 in HDD 4. The digital camera 15 is used by way of example to store image data in PC 1. Data to be stored is not limited to image data, but it is obvious that only audio data such as a music file may also be stored.

A memory device 10 has therein storage elements such as a semiconductor memory not shown, and is provided with a connection terminal 11 corresponding to USB. In the state that the connection terminal 11 is connected to a USB port 8 provided on the USB Interface 6, PC 1 accesses the memory device 10 and can read data stored in the memory device 10 or write data possessed by PC 1 in the memory device 10. The memory device 10 may be a portable flash memory.

Recorded in a recording medium 14 such as a CD-ROM are a reproduction program 16, an automatic activation program 17, a data write program 18, a driver 19, an install program 20 and the like. For example, a user copies and installs the programs 16 to 20 recorded in the recording medium in PC 1 to allow the user to use the programs 16 to 19 on PC 1.

The reproduction program 16 is a program for reproducing image data and the like picked up by the digital camera 15 or the like. The reproduction program reproduces image data and audio data by using, e.g., GUI (Graphical User Interface). The automatic activation program 17 executes the reproduction program 16 in response to a detection signal of PC 1 detecting that the terminal 11 of the memory device 10 is connected to the USB port 8. The data write program 18 is a program for writing image data picked up by the digital camera 15 in the memory device 10. The driver 19 is a program for operating the memory device 10 on PC 1. The install program 20 is a program for installing the programs 16 to 19 in PC 1.

Examples of OS 21 of PC 1 are Windows (registered trademark) 95, 98, 2000, XP of Microsoft Corporation and the like. These OSes support a plug-and-play function at, for example, the USB interface 6. Plug-and-play operates as follows. For example, as certain hardware is connected to a system, the system acquires identification information unique to the hardware from the hardware, and a driver of the hardware corresponding to the identification information is automatically activated. In this embodiment, for example, if a driver (e.g., driver 19) corresponding to hardware (e.g., memory device 10) is registered in the registry 24, PC 1 automatically activates the driver. On the other hand, if the driver corresponding to the hardware is not registered in the registry 24, PC 1 recommends to search and install an optimum driver or automatically activates the install program.

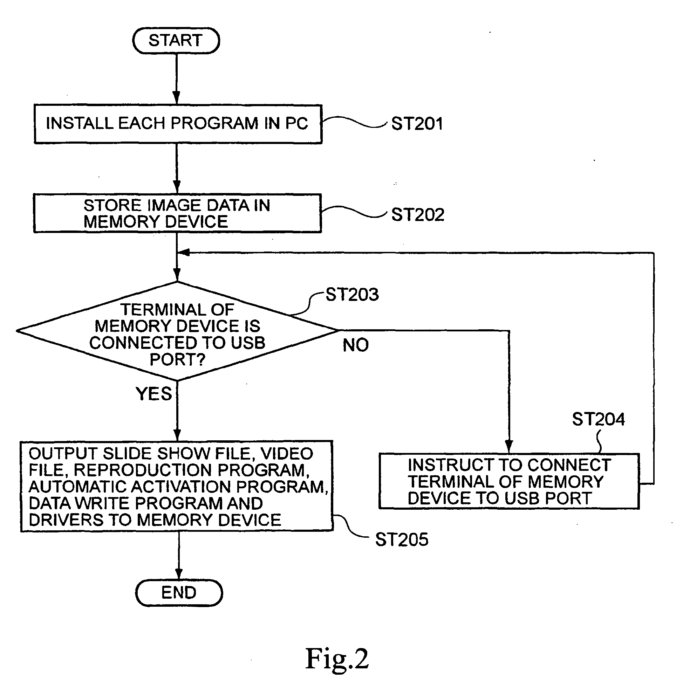

Next, description will be made on the operation of the system constructed as above. Fig. 2 is a flow chart illustrating the operation.

It is first assumed that PC 1 has image data and video data picked up by the digital camera 15 stored by a user beforehand in HDD 4. A user copies the programs 16 to 20 recorded in the recording medium 14 in HDD 4 of PC 1, and the programs 16 to 19 are installed to register setting information on each program (Step 201).

If the driver 19 recorded in the recording medium 14 is not installed in PC 1 and a user connects the memory device 10 to the USB interface 6, CPU 2 instructs to install the driver 19 through plug-and-play as described above.

After the programs 16 to 19 are installed, for example, a user works to store a portion or the whole of the image data stored in PC 1 in the memory device (Step 202). This work is performed by using the data write program 18 installed at Step 201. In this embodiment, this write work in the memory device 10 will be described together with, for example, in the case of a still image file, a work of creating a slide show using still images.

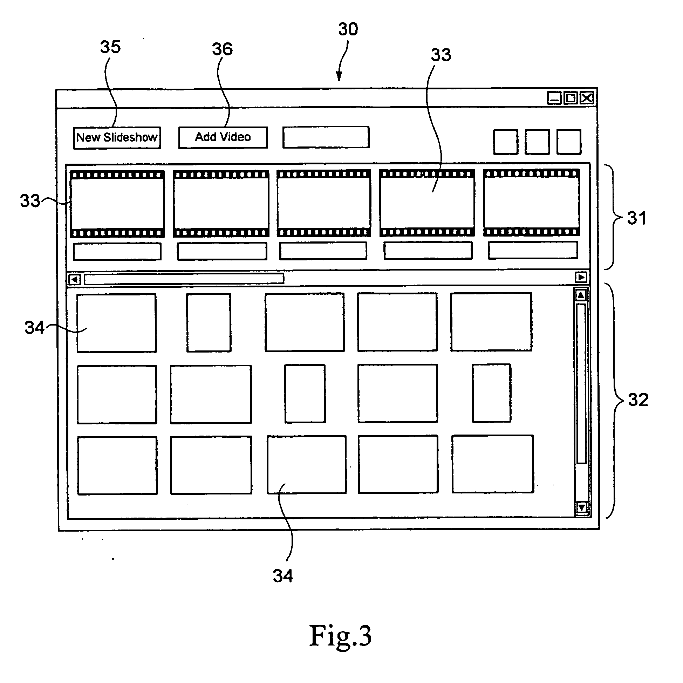

Figs. 3, 4 and 5 show screens displayed on the display 27 when the write work is performed. As the data write program 18 is activated, CPU 2 opens a fundamental screen 30 such as shown in Fig. 3. For example, if there exist already created slide show and video files 33, these files are displayed in boxes 31. Displayed in the box 32 is an image file 34 in the folder presently selected by a user. If the user wishes to create, for example, a file or slide show, a new slide show button 35 is depressed to start a slide shown file creation procedure. For example, files 33, 34 and the like are displayed as icons or as reduced images so that the user can easily locate them.

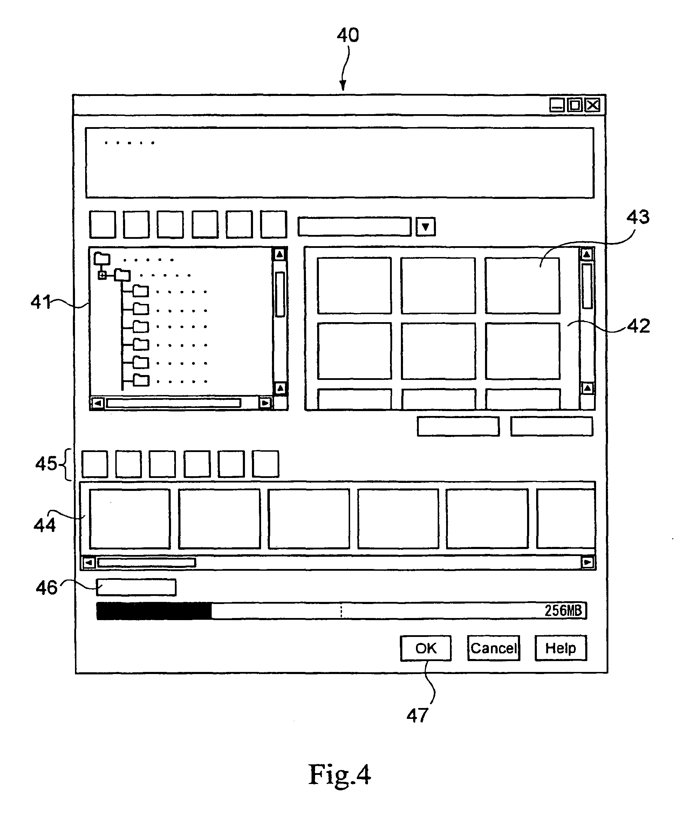

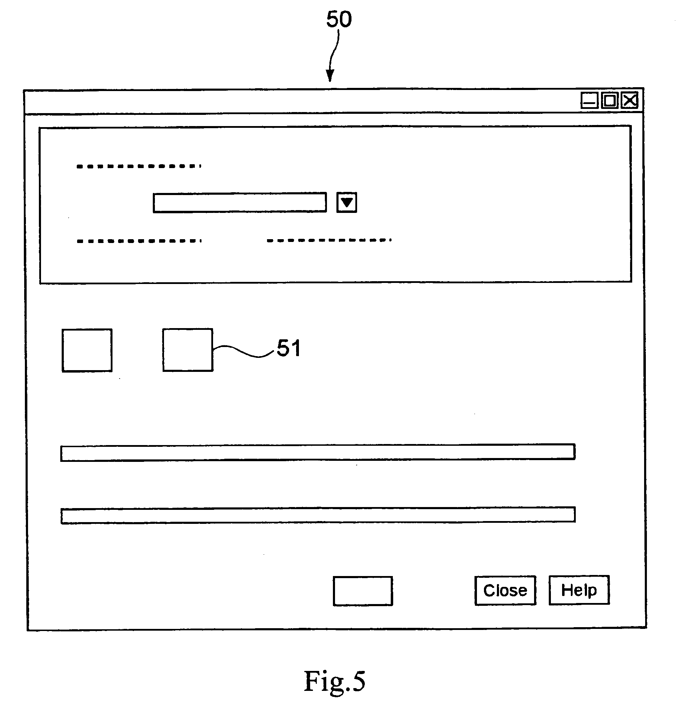

As the user depresses the new slide show button 35, a dialog box 40 such as shown in Fig. 4 is opened. As the user selects a folder storing image files constituting a slide show to be created, files 43 in the folder are displayed in a file window 42. The user selects a file 43 in the file window 42 and moves it to an image-list box 44 through drag-and-drop, to thereby decide the image file to be used for the slide show. Slide show tool buttons 45 are used for deletion, rotation, slide order and the like of the selected slide. BGM of the slide show can be selected from music stored in the recording medium by using a back music button 46. Adding a video file and the like can be performed by a method similar to that of creating the slide show, as the user clicks an add-video button 36. As the user depresses an OK button 47, files constituting the slide show or video files are decided and the decided files are stored in a temporarily folder or the like of OS 21. Then, CPU 2 displays a screen 50 such as shown in Fig. 5. In this screen 50, as the user depresses, for example, a start button 51, slide show files are created. The created files and selected video files are output to the memory device 10.

As the start button 51 is depressed, CPU 2 confirms whether the memory device 10 is connected to the USB interface 6, i.e., whether the terminal 11 of the memory device 10 is connected to the USB port 8 (Step 203) (refer to Fig. 2). If the memory device 10 is not connected, the user is instructed to connect the memory device (Step 204). If the memory device 10 is being connected, CPU 2 outputs the slide show files and video files stored in the temporary folder or the like as well as the reproduction program 16, automatic activation program 17, data write program 18, driver 19 and install program 20 stored in HDD 4, to the memory device 10 (Step 205).

The write work of an image file into the memory device 10 has been described above together with the slide show file creating work. The embodiment is not limited thereto, but after the slide show files are created, the user may store once the files in HDD 4 of PC 1 as a user designated folder. It is obvious that only the video files are output to the memory device 10.

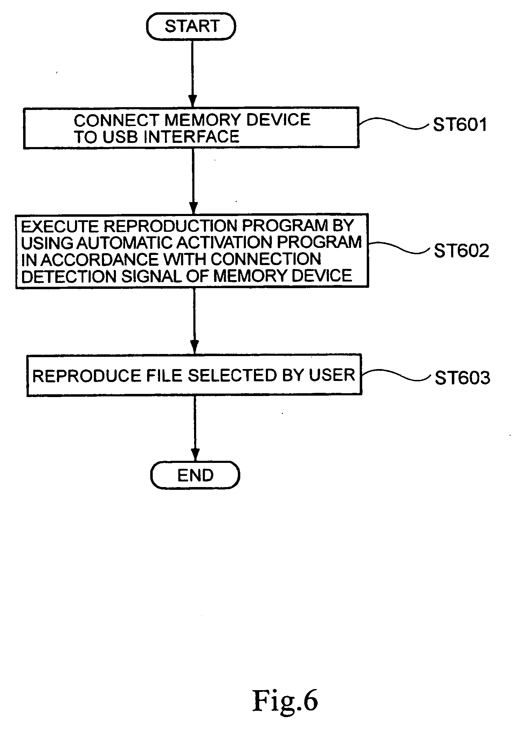

Next, description will be made on the operation of reproducing the slide show files and video files stored in the memory device 10, by using the memory device, to be executed by the user. Fig. 6 is a flow chart illustrating the operation.

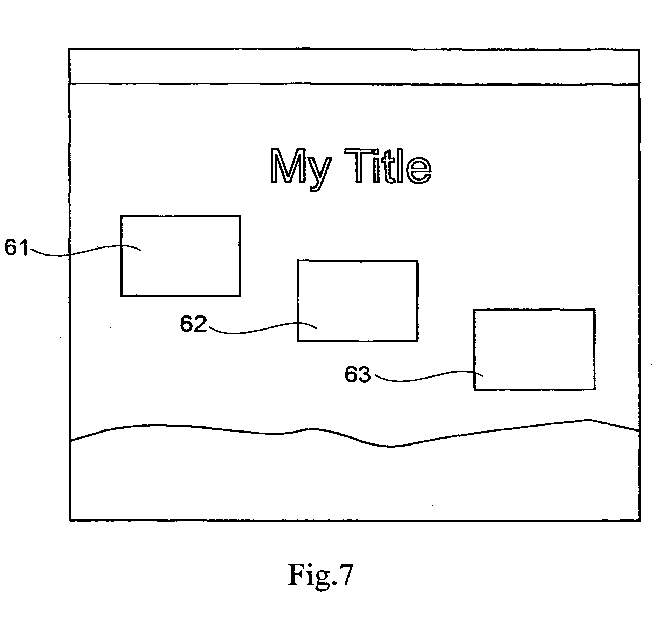

For example, as the user connects the memory device 10 to the USB interface 6 (Step 601), CPU 2 detects its connection, and in response to this detection signal, executes the reproduction program 16 having the GUI function stored in HDD by using the automatic activation program 17 (Step 602). Fig. 7 shows a screen displayed on the display 27 by the GUI function. As shown in Fig. 7, in an initial screen, for example, two slide show files 61 and 62 and a video file 63 are displayed as icons. As one file is selected by the user, CPU 2 accesses the memory device 10 via the USB interface 6 and reproduces the file (Step 603).

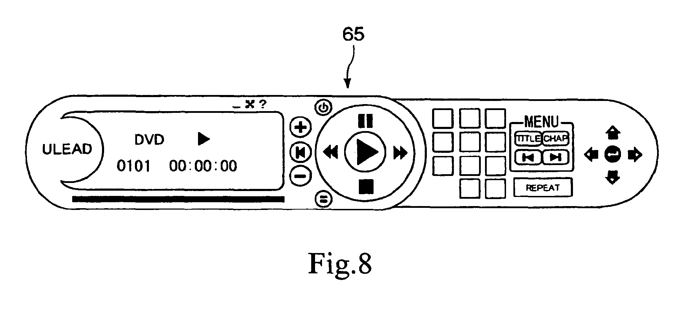

If a file to be reproduced is a music file containing only sounds, the reproduction program 16 having the GUI function such as shown in Fig. 8 is executed by the operation similar to that of Steps 601 to 603, and the music file is reproduced by using the reproduction program. Reference numeral 65 represents a GUI display screen of the reproduction program.

As described above, according to the embodiment, after the reproduction program 16 and automatic activation program are installed once in PC 1, the reproduction program 16 is automatically activated when the memory device 10 is connected to the USB interface 6 of PC 1, and image data and the like stored in the memory device 10 can be reproduced. Namely, for example, image data and the like can be viewed easily as if a switch of a television is turned on, and it is very convenient.

Further, according to the embodiment, for example, if a user wishes to reproduce and view image data and the like stored in the memory device 10 on a second PC (not shown) different from PC 1, the second PC can execute the following processing. For example, as a user connects the memory device 10 to a USB interface possessed by the second PC, the second PC searches a driver for operating the memory device 10 through plug-and-play. Since the second PC does not have the driver, it is recommended to install an optimum driver. The user operates the second PC to install the driver 19 stored in the memory device 10 and install the reproduction program 16 and automatic activation program 17 in the second PC. This installation can be performed by using the install program 20 stored in the memory device 10. Alternatively, if the second PC does not have the driver, it may access the memory device and automatically install an optimum driver (driver 19) by using the install program 20. Thereafter, by merely connecting again the memory device 10 to the USB Interface, the reproduction program can be automatically activated by the automatic activation program 17 and image data and the like can be reproduced.

Next, description will be made on another embodiment of the present invention.

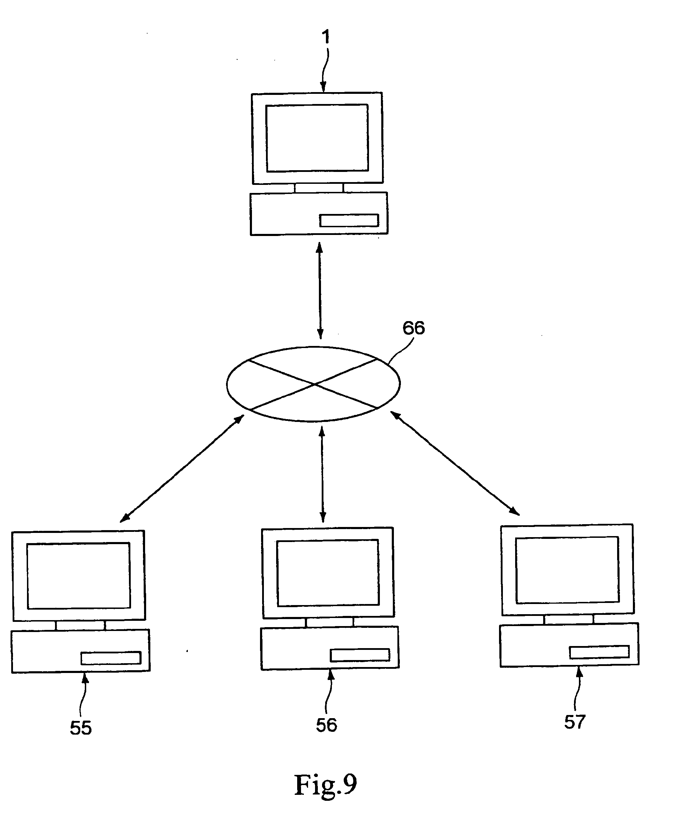

Fig. 9 shows an embodiment. For example, PC 1 is connected to a plurality of other PCs 55, 56 and 57 via a network 66 such as LAN (Local Area Network) so that data communications are possible. Identification information unique to PCs 55, 56 and 57 is stored in HDD 4 of PC 1. For example, if the network 66 uses TCP/IP (Transmission Control Protocol / Internet Protocol), IP addresses are used as the identification information. For example, PC 1 sets beforehand some or all of the identification information of PCs 55, 56 and 57, and installs software for automatically transferring data to PCs whose identification information was set.

In the system of this type, for example, it is assumed that a user connects the memory device 10 to the USB interface 6 of PC 1. As described in the first embodiment, PC 1 detects the connection and in response to the detection signal, activates the reproduction program 16 by using the automatic activation program 17. PC 1 reproduces image data and the like, and by using the above-described software, reads the registered identification information of a predetermined PC to automatically transfer image data to be reproduced to the PC. The PC received the image data automatically activates the same reproduction program 16 installed in advance and reproduce the received image data approximately at the same time as that at PC 1. In this case, it is necessary to install the programs 16 to 19 from the storage medium 14 to PCs 55, 56 and 57. Alternatively, the memory device 10 in the state at Step 205 shown in Fig. 2 may be connected to PCs 55, 56 and 57 to install the programs 16 to 19.

Alternatively, when the memory device 10 is connected to the USB interface 6 of PC 1 and the reproduction program 16 is automatically activated, PC 1 may output a signal for automatically activating the reproduction program in accordance with the identification information, to PC corresponding to the identification information. Approximately at the same time as the timing when PC 1 reproduces image data, the corresponding PC may reproduce the same image data. Namely, in the former example, signals when PC 1 reproduces image data are output to a predetermined PC. In the latter example, a signal when PC 1 automatically activates the reproduction program is output to a corresponding predetermined PC.

PC 1 may set beforehand which data among image data stored in the memory device 10 is to be transferred.

As described above, according to the embodiment, the reproduction program automatically activated at PC 1 can be automatically activated approximately at the same time at PCs 55, 56 and 57 connected to the network 66, and the image data reproduced at PC 1 can be automatically reproduced approximately at the same time at PCs 55, 56 and 57. If the embodiment is applied to an office or the like having a LAN environment for example, it is effective in that a plurality of people can view image data approximately at the same time.

Description will be made on a case wherein, the network 66 of the system shown in Fig. 9 is , for example, the Internet and PC 55 is a server 55' on the Web possessed by an individual. In this case, a user of PC 1 can automatically upload image data and the like to a web site provided by the server 55'. More specifically, as a user connects the memory device 10 to the USB interface 6 of PC 1, and the reproduction program is automatically activated in response to a connection detection signal. PC 1 can automatically upload image data and the like stored in the memory device to the predetermined server 55'.

If the network 66 of the system shown in Fig. 9 is , for example, the Internet or the like and PC 56 is a server 56' of so-called on-line storage service for providing services of storing image data and the like on the Web, PC 1 may automatically transfer and store image data and the like to the server 56'.

According to the embodiment, for example, if PC 1 is a lap top type PC, photograph images, moving images and the like photographed outdoors by a user are stored in the memory device 10. By connecting the memory device 10 to PC 1, image data can be automatically transferred to the server 55' or 56'. This configuration is very convenient as compared to conventional manual upload. Image files such as photograph images and moving images among others are often photographed at a location different from a user house. Therefore, automatic transfer of this type can dispense with cumbersome works of uploading from a location different from a user house.

If the network 66 of the system shown in Fig. 9 is the Internet or LAN, PC 57 may be a backup server 57'. Also in this case, when the memory device 10 is connected to the USB interface 6 and the reproduction program 16 is automatically activated in response to a connection detection signal, PC 1 can automatically store image data and the like stored in the memory device 10, in the predetermined backup server 57'.

## Claims

1. A data processing system comprising:
(A) a host machine (1) comprising:
(a) an interface (6) configured for data input/output with a terminal of a portable memory device (10) having a storage element for storing at least one of image data and audio data, said host machine comprising a reproduction program (16) which when executed by said host machine controls said host machine to reproduce said at least one of image data and audio data such that said image data is displayed on a display (27), an execution program (17) which when executed by said host machine controls said host machine in response to a detection signal indicating that said host machine (1) has detected a connection of said terminal (11) to said interface (fi), to execute said reproduction program; and
(b) means for detecting that said terminal of said portable memory device (10) is connected to said interface and for generating said detection signal and means configured in response to said detection signal to process said execution program and to output via a network (66) to at least one external apparatus (55-57) designated beforehand said at least one of image data and audio data;
(B) said portable memory device (10) having said terminal (11) capable of being connected to said interface (6), and said storage element; and
(C) said at least one external apparatus (55-57) connected to said host host machine (1) via said network (66) and comprising a same program (16) as said reproduction program (16) on said host machine (1), said at least one external apparatus (55-57) being responsive to receipt of said at least one of image data and audio data to activate said same reproduction program (16) and to reproduce said received at least one image data and audio data at approximately the same time that it is reproduced on said host machine.

## Patentansprüche

1. Datenverarbeitungssystem, welches umfasst:
(A) eine Leit-(Host)-Maschine (1), welche umfasst:
(a) eine Schnittstelle (6), welche zur Dateneingabe/-ausgabe konfiguriert ist, mit einem Anschluss eines portablen Speicherbausteins (10), welcher ein Speicherelement hat, um zumindest eines von Bilddaten und Audiodaten zu speichern, wobei die Host-Maschine ein Wiedergabeprogramm (16) umfasst, welches, wenn durch die Host-Maschine ausgeführt, die Host-Maschine steuert, um die zumindest eines von Bilddaten und Audiodaten zu reproduzieren, so dass die Bilddaten auf einer Anzeige (27) angezeigt werden, ein Ausführungsprogramm (17), welches, wenn durch die Host-Maschine ausgeführt, die Host-Maschine als Antwort auf ein Erfassungssignal steuert, welches zeigt, dass die Host-Maschine (1) eine Verbindung des Anschlusses (11) mit der Schnittstelle (6) erfasst hat, um das Wiedergabeprogramm auszuführen; und
(b) eine Einrichtung zum Erfassen, dass der Anschluss des portablen Speicherbausteins (10) mit der Schnittstelle verbunden ist und um das Erfassungssignal zu erzeugen, und eine Einrichtung, welche konfiguriert ist, als Antwort auf das Erfassungssignal das Ausführungsprogramm zu verarbeiten und um über ein Netzwerk (66) die zumindest einen von Bilddaten und Audiodaten an zumindest eine externen Vorrichtung (55-57) auszugeben, die vorher bestimmt würde;
(B) den portablen Speicherbaustein (10), welcher den Anschluss (11), der mit der Schnittstelle (6) verbunden werden kann, und das Speicherelement hat; und
(C) die zumindest eine externe Vorrichtung (55-57), welche mit der Host-Maschine (1) über das Netzwerk (66) verbunden ist und das gleiche Programm (16) wie das Wiedergabeprogramm (16) auf der Host-Maschine umfasst (1), wobei die zumindest eine externe Vorrichtung (55-57) die auf dem Empfang von zumindest eines von Bilddaten und Audiodaten das Wiedergabeprogramm (16) zu aktivieren und um die empfangenen zumindest einen Bilddaten und Audiodaten in ungefähr der gleichen Zeit wiederzugeben, wo sie auf der Host-Maschine reproduziert werden.

## Revendications

1. Système de traitement de données comprenant :
(A) une machine hôte (1) comprenant :
(a) une interface (6) constituée pour entrer/sortir des données à l'aide d'une borne d'un dispositif portatif de mémoire (10) comportant un élément de mémorisation apte à mémoriser au moins l'une de données d'image et de données audio, ladite machine hôte comprenant un programme de reproduction (16) qui, lorsqu'il est exécuté par ladite machine hôte, commande ladite machine hôte pour reproduire ladite au moins une des données d'image et des données audio de sorte que lesdites données d'image sont affichées sur un écran (27), un programme d'exécution (17) qui, lorsqu'il est exécuté par ladite machine hôte, commande ladite machine hôte en réponse à un signal de détection indiquant que ladite machine hôte (1) a détecté une connexion de ladite borne (11) à ladite interface (6), pour exécuter ledit programme de reproduction ; et
(b) un moyen apte à détecter que ladite borne dudit dispositif portatif de mémoire (10) est connectée à ladite interface et à engendrer ledit signal de détection et un moyen constitué en réponse audit signal de détection pour traiter ledit programme d'exécution et pour sortir via un réseau (66) vers au moins un appareil externe (55 à 57) désigné au préalable ladite au moins une des données d'image et des données audio ;
(B) ledit dispositif portatif de mémoire (10) comportant ladite borne (11) capable d'être connectée à ladite interface (6), et audit élément de mémorisation ; et
(C) ledit au moins un appareil externe (55 à 57) connecté à ladite machine hôte (1) via ledit réseau (66) et comprenant un programme identique (16) audit programme de reproduction (16) sur ladite machine hôte (1), ledit au moins un appareil externe (55 à 57) étant sensible à la réception de ladite au moins une des données d'image et des données audio pour activer ledit programme identique de reproduction (16) et pour reproduire ladite au moins une, reçue, des données d'image et des données audio à peu près en même temps qu'elle est reproduite sur ladite machine hôte.
